## Europäisches Patentamt
## European Patent Office
## Office européen des brevets

(19)

(11) Numéro de publication: **0 019 571**
**B1**

(12)
# FASCICULE DE BREVET EUROPEEN

(45) Date de publication du fascicule du brevet:
04.05.83

(51) Int. Cl.³: **B 62 D 1/18**

(21) Numéro de dépôt: **80420063.2**

(22) Date de dépôt: **14.05.80**

---

(54) Colonne de direction orientable pour un véhicule routier.

---

(30) Priorité: **16.05.79 FR 7913294**

(43) Date de publication de la demande:
**26.11.80 Bulletin 80/24**

(45) Mention de la délivrance du brevet:
**04.05.83 Bulletin 83/18**

(84) Etats contractants désignés:
**AT BE CH DE GB IT LI LU NL SE**

(56) Documents cités:
**US-A-2 903 904**
**US-A-2 988 931**
**US-A-3 691 866**

(73) Titulaire: **RENAULT VEHICULES INDUSTRIELS Société dite:, 129 Rue Servient, F-69003 Lyon (FR)**

(72) Inventeur: **Savoie, Marcel, Pavillon no 8, Le Gouret,F-38540 Heyrieux (FR)**

(74) Mandataire: **Maisonnier, Jean, 28 rue Servient, F-69003 Lyon (FR)**

---

BUNDESDRUCKEREI BERLIN

## Colonne de direction orientable pour un véhicule routier

La présente invention concerne une colonne de direction orientable pour un véhicule routier.

L'invention s'adresse plus particulièrement aux véhicules de transport du type poids lourds, destinés aux longues distances, pour lesquels le pilote doit bénéficier d'un confort maximum étant donné qu'il conduit de nombreuses heures d'affilée.

La position du volant de direction constitue un élément de confort particulièrement important du pilote. La position idéale du volant varie d'un pilote à l'autre, puisqu'elle dépend de la taille et de la corpulence du pilote. Un même pilote peut aussi vouloir changer de position de conduite, par exemple selon qu'il conduit en ville ou sur autoroute.

L'invention a pour but de réaliser une colonne de direction orientable permettant de modifier rapidement et à volonté la position du volant.

L'invention a aussi pour but de réaliser une colonne de direction pouvant être bloquée de façon efficace quelle que soit la position idéale choisie.

Une colonne de direction orientable déjà connue du brevet US-A-3 691 866 est montée sur un palier qui est lui-même fixé sur le véhicule par l'intermédiaire d'un système déformable comprenant deux bielles et trois pivots dont les axes parallèles définissent les sommets d'un triangle en projection sur un plan vertical longitudinal du véhicule, deux de ces pivots, dits pivots fixes étant solidaires du véhicule, le troisiènne pivot étant constitué par un boulon qui permet un blocage par serrage entre la tête de ce boulon et un écrou engagé sur la tige du boulon. Dans ce dispositif l'une des extrémites de chacune des deux brielles est articulée sur chacun des pivots fixes. Le réglage ainsi réalisé n'est pas continu et le palier ne pennat pas un ajustement optimum. Selon l'invention ce réglage est continue et permet par un coulissement de la colonne dans son palier d'obtenir l'ajustément optimum. Ce réglage est realisé de manière simple et le blocage des éléments est obtenu par un seul organe. La colonne de direction orientable selon l'invention est alors caractérisée en ce que le boulon de blocage traverse et peut bloquer simultanément les deux autres extrémites des bielles et le palier dans une position dournée.

Suivant une caractéristique supplémentaire de l'invention, le boulon de blocage est engagé pour tourner dans un trou cylindrique du palier, et dans un trou cylindrique de l'une des bielles, mais est engagé pour se déplacer à l'intérieur d'une lumière allongée de l'autre bielle, la largeur de cette lumière correspondant sensiblement au diamètre du boulon.

Suivant une caractéristique supplémentaire de l'invention, des disques de matière synthétique sont intercalés sur le boulon de blocage entre les bielles et le palier, l'ensemble étant prévu de façon que la totalité de la surface des disques adjacents à la bielle munie de la lumière allongée soit toujours en contact avec cette bielle, quelle que soit la position du boulon de blocage le long de cette lumière.

Suivant une caracteristique supplémentaire de l'invention, celui des deux pivots fixes qui est le plus éloigné du volant de direction est celui sur lesquel est articulée la bielle pourvue de la lumière allongée.

Suivant une caractéristique supplémentaire de l'invention, le palier de la colonne de direction est solidaire d'une tige qui s'étend parallèlement aux pivots, et qui est susceptible de buter contre une butée prévue sur la bielle pourvue de la lumière allongée.

Suivant une caractéristique supplémentaire de l'invention, chaque bielle se compose de deux éléments de bielle sensiblement identiques l'un à l'autre, et disposés symétriquement l'un de l'autre de part et d'autre du palier de la colonne de direction et de part et d'autre d'un support dans lequel est engagée la partie centrale des pivots fixes.

Le dessin annexé, donné à titre d'exemple non limitatif, permettra de mieux comprendre les caractéristiques de l'invention.

— Fig. 1 est une vue latérale de la cabine de conduite d'un véhicule routier pourvu d'une colonne de direction orientable suivant l'invention.
— Fig. 2 est une vue éclatée en perspective de cette colonne de direction.
— Fig. 3 à 6 sont des vues latérales de cette colonne de direction, dans quatre positions différentes.

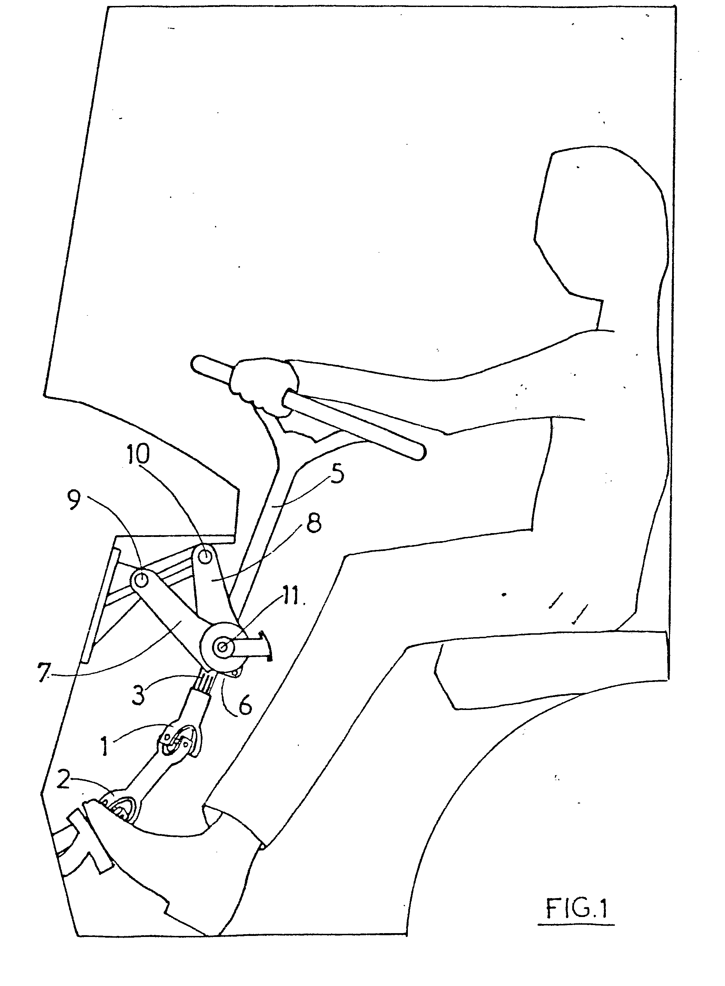

On a représenté sur la fig. 1 la cabine de conduite d'un véhicule routier du type poids lourd pourvu d'une colonne de direction orientable suivant l'invention.

Suivant une disposition connue, la colonne de direction comporte deux cardans 1 et 2 et une portion télescopique 3 qui autorisent des déplacements du volant 4 dans differentes positions.

La colonne de direction 5 est montée sur un palier 6 qui est luimême fixé sur le véhicule par l'intermédiaire d'un système déformable comprenant deux bielles 7 et 8 et trois pivots 9, 10, 11. Les axes de ces pivots, qui sont parallèles, définissent les sommets d'un triangle en projection sur un plan vertical longitudinal du véhicule.

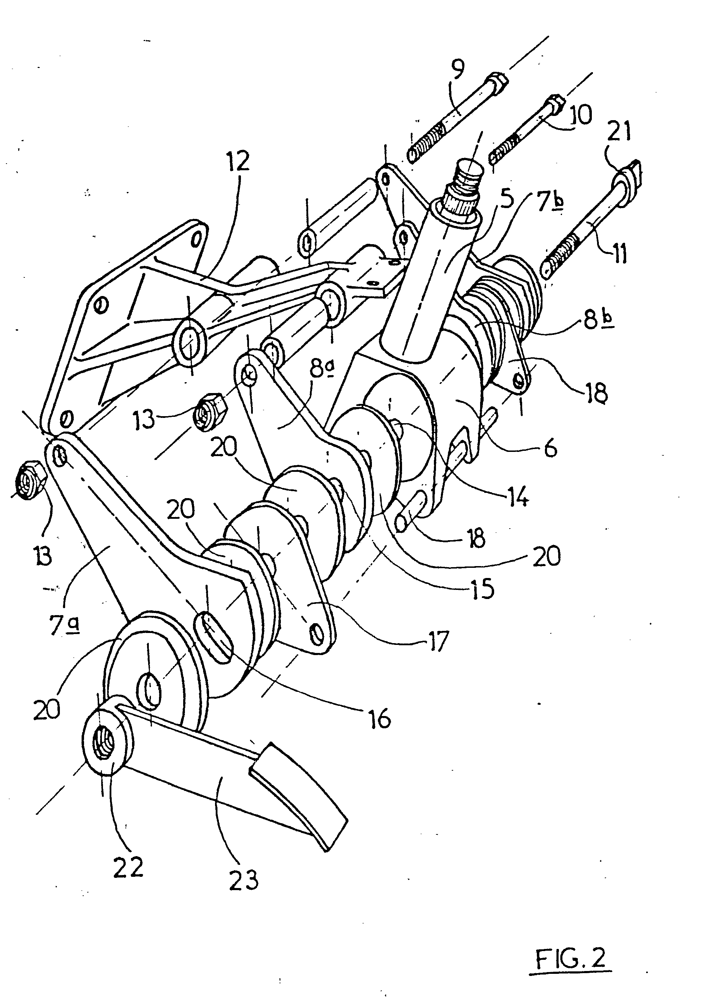

Comme on peut le voir sur la fig. 2, chaque bielle se compose en fait de deux éléments 7a et 7b ou 8a et 8b qui sont sensiblement identiques l'une à l'autre, et qui sont disposés symétriquement l'un de l'autre de part et d'autre du palier 6, et de part et d'autre d'un support 12 fixé à la charpente du véhicule.

La partie centrale des pivots 9 et 10, dits pivots fixes, est engagée dans le support 12. Les éléments 7a et 7b de la bielle 7 ont leur extrémité avant articulée sur la pivot 9, alors que les éléments 8a et 8b de la bielle 8 ont leur ectrémite avant articulée sur le pivot 10, le pivot 10 étant plus proche du volant 4 que le pivot 9. Dans le cas présent, les pivots 9 et 10 sont sonstitués par des boulons recevant chacun un écrou-frein 13. Les écrous-freins 13 en sont pas serrés, ils ne servent qu'à immobiliser les boulons dans le sens axial.

Le pivot 11 est constitué par un boulon de blocage qui traverse simultanément les bielles 7 et 8 et le palier 6. La tige de ce boulon de blocage 11 est engagée pour tourner dans un trou cylindrique 14 du palier 6, et dans un trou cylindrique 15 des éléments de bielle 8a et 8b. La tige de ce boulon est en outre engagée pour se déplacer à l'interieur d'une lumière allongée 16 des éléments de bielle 7a et 7b. La largeur des lumières 16 correspond sensiblement au diamètre de la tige du boulon 11, et l'axe du pivot 9 est situé dans le plan médian longitudinal des lumières 16.

Une plaque 17, également engagée sur la tige du boulon de blocage 11, est placée entre les éléments de bielle 7a et 8a, tandis qu'une plaque 18 est montée de la même façon entre les éléments de bielle 7b et 8b. Le palier 6 est solidaire d'une tige 18 qui s'étend parallèlement aux pivots 9, 10, 11 et qui est également engagée dans les plaques 17 et 18. Cette tige 18 est par ailleurs susceptible de buter contre des butées 19 prévues sur les éléments de bielle 7a et 7b.

Des disques de matière synthétique 20 sont engagés sur la tige du boulon 11, et sont intercalés entre les pièces métalliques que constituent le palier 6, les éléments de bielle 7a, 7b, 8a, 8b et les plaques 17 et 18. L'ensemble est prévu de façon que la totalité de la surface des disques 20 adjacente aux éléments de bielle 7a et 7b soit toujours en contact avec ces éléments de bielle, quelle que soit la position de boulon 11 par rapport aux lumières 16. Tous les elements engagés sur la tige du boulon 11 peuvent être serrés entre la tête 21 de ce boulon et un écrou 22 qui est engagé sur la portion filetée de ladite tige, et qui est pourvu d'un bras de manœuvre 23.

Le fonctionnement est le suivant:

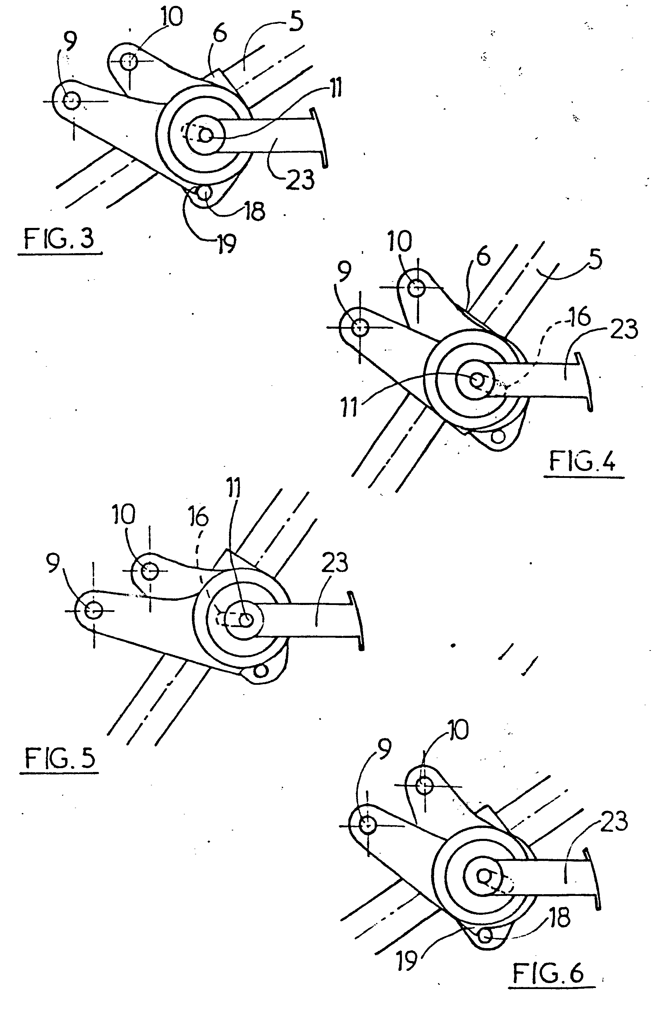

L'écrou 22 étant desserré, la position du volant est réglable à la fois en hauteur et en inclinaison. Le réglage en hauteur est obtenu par déplacement du palier 6 autour de l'axe du pivot 10 (fig. 4 et 5). Ce déplacement est permis moyennant un déplacement de la tige du boulon 11 le long des lumières 16. Cette tige bute dans les extrémités des lumières 16 en limitant l'amplitude de ces déplacements. Le réglage en inclinaison est obtenu par rotation du palier 6 autour du pivot 11 (fig. 3 et 5).

Pour bloquer la colonne de direction dans la position désirée, on agit sur le bras de manoeuvre 23 de façon à bloquer l'écrou 22, et de façon à transmettre une pression dans le système multidisques constitué par les disques 20 intercalés entre les pièces métalliques. Cette pression interdit à la fois la rotation des bielles 7 et 8, et la rotation du palier 6.

On effectue de préférence un pré-serrage du boulon de blocage 11 en agissant sur sa tête 21, de manière à positionner correctement le bras de manoeuvre 23 lorsque l'écrou 22 est bloqué.

**Revendications**

1. Colonne de direction orientable pour un véhicule routier, montée sur un palier (6) qui est lui-même fixé sur le véhicule par l'intermédiaire d'un système déformable comprenant deux bielles (7), (8), et trois pivots (9), (10), (11), dont les axes parallèles définissent les sommets d'un triangle en projection sur un plan vertical longitudinal du véhicule, deux desdits pivots (9), (10) dits pivots fixes étant solidaires du véhicule, et le troisième pivot (11) étant constitué par un boulon de blocage qui permet un blocage par serrage entre la tête de ce boulon et un écrou engagé sur latige dudit boulon, l'une des extrémités de chacune des deux bielles (7), (8) étant articulée sur chacun des pivots fixes (9), (10), et caractérisée en ce que le boulon de blocage (11) traverse et peut bloquer simultanément les deux autres extrémités des bielles (7), (8) et le palier (6) dans une position donnée.

2. Colonne de direction suivant la revendication 1, caractérisée en ce que le boulon de blocage (11) est engagé pour tourner dans un trou cylindrique du palier (6), et dans un trou cylindrique de l'une des bielles (8), mais est engagé pour se déplacer à l'intérieur d'une lumière allongée (16) d'autre bielle (7), la largeur de cette lumière (16) correspondant sensiblement au diamètre du boulon (11).

3. Colonne de direction suivant l'une quelconque des revendications précédentes, caractérisée en ce que des disques de matière synthétique (20) sont intercalés sur le boulon de blocage (11) entre les bielles (7), (8) et le palier (6), l'ensemble étant prévu de façon que la totalité de la surface des disques (20) adjacents à la bielle (7) munie de la lumière allongée (16) soit toujours en contact avec cette bielle (7), quelle que soit la position du boulon de blocage (11) le long de cette lumière (16).

4. Colonne de direction suivant la revendication 2, caractérisée en ce que le pivot fixe (9) qui est le plus éloigné du volant est celui sur lequel est articulée la bielle (7) pourvue de la lumière allongée (16).

5. Colonne de direction selon l'une quelconque des revendications 2 et 4, caractérisée en ce que le palier (6) de la colonne de direction (5) est solidaire d'une tige (18) qui s'étend parallèlement aux pivots (9), (10) et qui est susceptible de buter contre une butée (19) prévue sur la bielle (7) pourvue de la lumière allongée (16).

6. Colonne de direction suivant l'une quelconque des revendications précédentes, caractérisée en ce que chaque bielle (7), (8) se compose de deux éléments de bielle (7a), (7b) et (8a), (8b), sensiblement identiques l'un à l'autre, et disposés symétriquement l'un de l'autre, de part et d'autre du palier (6) de la colonne de direction (5) et de part et d'autre d'un support (12) dans lequel est engagée la partie centrale des pivots fixes (9) et (10).

## Patentansprüche

1. Ausrichtbare Steuersäule für ein Straßenfahrzeug, mit einem Lager (6), das seinerseits am Fahrzeug mittels eines verformbaren Systemes befestigt ist, umfassend zwei Pleuel (7, 8) und drei Gelenkzapfen (9), (10,11), deren parallele Achsen die Spitzen eines Dreieckes in Projektion auf eine senkrechte Längsebene des Fahrzeuges bilden, wovon zwei der Gelenkzapfen (9, 10), sogenannte feste Gelenkzapfen, einteilig mit dem Fahrzeug sind, und der dritte Gelenkzapfen (11) aus einem Riegelbolzen besteht, der ein Verriegeln mittels einer Pressung zwischen dem Kopf des Riegelzapfens und einer Schraube erlaubt, die am Schaft des Bolzens angreift, wobei das eine Ende eines jeden der beiden Pleuel (7, 8) an jedem der festen Schwenkzapfen (9, 10) gelenkig befestigt ist, und dadurch gekennzeichnet, daß der Riegelbolzen (11) gleichzeitig durch die beiden anderen Enden der Pleuel (7, 8) und das Lager (6) in einer gegebenen Position hindurchgeführt ist und diese zu verriegeln vermag.

2. Steuersäule nach Anspruch 1, dadurch gekennzeichnet, daß der Riegelbolzen (11) dazu dient, sich in einer zylindrischen Bohrung des Lagers (6) zu drehen, ferner in einer zylindrischen Bohrung einer der Pleuel (8), daß er sich aber im Inneren eines Langloches (16) des anderen Pleuels (7) zu verschieben vermag, wobei die Länge dieses Langloches (16) im wesentlichen dem Durchmesser des Bolzens (11) entspricht.

3. Steuersäule nach einem der vorausgegangenen Ansprüche, dadurch gekennzeichnet, daß Scheiben aus Kunststoff auf dem Riegelbolzen (11) zwischen den Pleueln (7, 8) und dem Lager (6) eingelassen sind, wobei die gesamte Einheit derart gestaltet und angeordnet ist, daß die Gesamtheit der Fläche der Scheiben (20) im Bereich des mit dem Langloch (16) ausgerüsteten Pleuels (7) stets in Berührung mit diesem Pleuel (7) steht, ungeachtet der Position des Riegelbolzens (11) entlang dieses Langloches (16).

4. Steuersäule nach Anspruch 2, dadurch gekennzeichnet, daß der feste Drehzapfen (9), der am weitesten vom Steuerrad entfernt ist, jener ist, an welchem der mit dem Langloch (16) ausgestattete Pleuel (7) angelenkt ist.

5. Steuersäule nach einem der Ansprüche 2 und 4, dadurch gekennzeichnet, daß das Lager (6) der Steuersäule (5) einteilig mit einer Stange (18) ist, die sich parallel zu den Gelenkzapfen (9, 10) erstreckt, und die sich gegen einen Anschlag (19) anzulegen vermag, der an dem mit dem Langloch (16) ausgestatteten Pleuel (7) vorgesehen ist.

6. Steuersäule nach einem der vorausgegangen Ansprüche, dadurch gekennzeichnet, daß jeder Pleuel (7), (8), aus zwei Pleuelelementen (7a, 7b) und (8a, 8b) zusammengesetzt ist, die im wesentlichen identisch miteinander sind und beidseits des Lagers (6) der Steuersäule (5) sowie beidseits einer Konsole (12) symmetrisch zueinander angeordnet sind, an welcher der zentrale Teil der festen Gelenkzapfen (9) und (10) angreift.

## Claims

1. A steering column for a road vehicle, adjustable for angle, which is mounted on a bearing (6) itself fixed to the vehicle by means of a flexible system comprising two crank arms (7), (8), and three pivots (9), (10), (11), of which the parallel axes define the apices of a triangle lying on a longitudinal vertical plane of the vehicle, two of the said pivots (9), (10), called fixed pivots, being attached to the vehicle, and the third pivot (11) being constituted by a locking bolt which allows locking through compression between the head of this bolt and a nut engaged on the stem of the said bolt, one of the ends of each of the two crank arms (7), (8), being pivoted on one of the fixed pivots (9), (10), and characterised in that the locking bolt (11) passes through and can simultaneously lock the two other ends of the crank arms (7), (8), and the bearing (6) in a given position.

2. A steering column according to claim 1, characterised in that the locking bolt (11) is fitted so as to turn in a cylindrical hole in the bearing (6) and in a cylindrical hole in one of the crank arms (8), but is fitted to move in a long slot (16) in the other crank arm (7), the width of this slot (16) closely corresponding to the diameter of the bolt (11).

3. A steering column according to either one of the preceding claims, characterised in that discs of synthetic material (20) are interposed on the locking bolt (11) between the crank arms (7), (8) and the bearing (6), the assembly being designed in such a way that the whole of the surface of the discs (20) adjacent to the crank arm (7) provided with the long slot (16) is always in contact with this crank arm (7), whatever the position of the locking bolt (11) may be along this slot (16).

4. A steering column according to claim 2, characterised in that the fixed pivot (9), which is the further from the steering wheel, is the one on which the crank arm (7) provided with the long slot (16) is pivoted.

5. A steering column according to either one of claims 2 and 4, characterised in that the bearing (6) of the steering column (5) is fixed to a rod (18) which extends parallel to the pivots (9), (10) and which is able to contact a stop (19) provided on the crank arm (7) which has the long slot (16).

6. A steering column according to any one of the preceding claims, characterised in that each crank arm (7), (8) consists of two component crank arms (7a), (7b), and (8a), (8b), virtually identical the one to the other, and arranged symmetrically with relation to each other on either side of the bearing (6) of the steering column (5) and on either side of a support (12) in which the central parts of the fixes pivots (9) and (10) are fitted.

FIG.1

FIG. 2

FIG. 3

FIG. 4

FIG. 5

FIG. 6